# EUROPEAN PATENT APPLICATION

(11) **EP 4 714 621 A1**
(43) Date of publication of application: **25.03.2026**
(21) Application number: 25199587.4
(22) Date of filing: 02.09.2025
(51) Int. Cl.: B26F 1/44, B23P 15/28, B21D 28/04, B21D 28/14

(54) **DIE ASSEMBLY FOR NOTCHING ELECTRODE PLATE OF SECONDARY BATTERY AND METHOD OF MANUFACTURING DIE ASSEMBLY**

(30) Priority: 20.09.2024 KR 20240127648
(71) Applicant: SAMSUNG SDI CO., LTD., Yongin-si, Gyeonggi-do 17084 (KR)
(72) Inventor: KWON, Sungjin, 17084 Yongin-si (KR); JO, Seonghyun, 17084 Yongin-si (KR)
(74) Representative: Marks & Clerk LLP

(57) **Abstract**

The present disclosure relates to a die assembly used for notching or cutting an electrode plate of a secondary battery and a method of manufacturing the die assembly. The present disclosure provides a method of manufacturing a punch holder and a die holder of a die assembly for notching an electrode plate of a secondary battery, which includes fixedly overlapping a punch holder and a die holder, simultaneously polishing side surfaces of the punch holder and the die holder overlapping each other, setting a center point of each of the punch holder and the die holder overlapping each other, and generating a reference hole passing through each of the punch holder and the die holder overlapping each other at a position spaced from the center point, and a notching die assembly manufactured by the method.

## Description

### BACKGROUND

### 1. Field

The present disclosure relates to a die assembly used for notching or cutting an electrode plate of a secondary battery and a method of manufacturing the die assembly.

### 2. Description of Related Art

While primary batteries are not designed to be (re)charged, secondary (also known as rechargeable) batteries are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

The positive or negative electrode plate can be manufactured through coating, rolling, slitting, and notching processes. In the notching process, electrode plates are manufactured by cutting unnecessary parts of a substrate using a shearing die and forming electrode tabs. A notching die assembly includes a pair of punches and dies which punch the electrode plates according to a desired shape, and punch plates and die plates on which the pair of punches and dies are assembled, respectively. The notching die assembly is installed in press equipment for operating the notching die assembly.

Since all parts of die assembly equipment are individually processed for the convenience of assembling the notching die assembly, assembly precision can drop due to dimensional deviations between the parts when the notching die assembly is assembled. In addition, since there is no reference point for measuring positions of the punches and dies even after the die assembly is assembled, only a distance between the punch and the die can be roughly measured.

The information disclosed in this Background section is for enhancement of understanding of the background of the present disclosure. The section may contain information that does not constitute related (or prior) art.

### SUMMARY

The present disclosure is directed to providing a method of securing assembly precision of a punch plate and a die plate and enabling precision measurement after assembly in particular when a notching die assembly requiring precision is manufactured.

Embodiments of the present disclosure provide a die assembly for notching an electrode plate of a secondary battery, which includes a punch holder in which a pocket is machined, a punch for notching an electrode plate of a secondary battery being mounted to or on the pocket, a die holder in which a pocket is machined, and a die for notching the electrode plate of the secondary battery being mounted on the pocket, wherein side surfaces of the punch holder and the die holder are aligned with each other, the punch holder and the die holder have a center point that is common at the same position, and the punch holder and the die holder have a reference hole that is common and machined at a position spaced a distance from the center point.

Embodiments of the present disclosure provide a die assembly including: a punch holder including a first pocket, the first pocket configured to accommodate a punch for notching an electrode plate of a secondary battery being placed on the first pocket; and a die holder including a second pocket, the second pocket configured to accommodate a die for notching the electrode plate being placed on the second pocket, wherein side surfaces of each of the punch holder and the die holder are aligned with each other, wherein each of the punch holder and the die holder has a center point at a same position, and wherein each of the punch holder and the die holder has a reference hole at a same position spaced from the center point.

In an embodiment, the punch holder and the die holder are fixedly overlapping with each other, and wherein the side surfaces of each of the punch holder and the die holder, upon simultaneous polishing, are flush.

In an embodiment, the position of the center point of each of the punch holder and the die holder is based on the side surfaces of each of the punch holder and the die holder.

In an embodiment, the first pocket is based on the reference hole of the punch holder, and wherein the second pocket is based on the reference hole of the die holder.

In an embodiment, the die assembly further includes a pin inserted into the reference hole of the punch holder and the reference hole of the die holder.

Embodiments of the present disclosure provide a method of manufacturing a punch holder and a die holder of a die assembly for notching an electrode plate of a secondary battery, which includes fixedly overlapping a punch holder and a die holder, simultaneously polishing side surfaces of the punch holder and the die holder overlapping each other, setting a center point of each of the punch holder and the die holder overlapping each other, and machining a reference hole passing through each of the punch holder and the die holder overlapping each other at a position spaced a distance from the center point.

Embodiments of the present disclosure provide a method of manufacturing a punch holder and a die holder of a die assembly for notching an electrode plate of a secondary battery, the method including: fixedly overlapping the punch holder and the die holder; simultaneously polishing side surfaces of each of the punch holder and the die holder; setting a center point of each of the punch holder and the die holder; and generating a reference hole passing through each of the punch holder and the die holder at a position spaced from the center point.

In an embodiment, the method further includes before the fixedly overlapping, polishing respective surfaces of the punch holder and the die holder that are to be in contact.

In an embodiment, the setting comprises setting the center point based on the side surfaces of each of the punch holder and the die holder that are simultaneously polished.

In an embodiment, the method further includes generating a pocket in each of the punch holder and the die holder based on the reference hole.

In an embodiment, the method further includes before the fixedly overlapping, roughly generating a pocket in each of the punch holder and the die holder.

In an embodiment, the fixedly overlapping comprises fixing the punch holder and the die holder using clamping, bolting, or welding.

Embodiments of the present disclosure provide a method of manufacturing a die assembly for notching an electrode plate of a secondary battery, which includes fixedly overlapping a punch holder and a die holder, simultaneously polishing side surfaces of the punch holder and the die holder overlapping each other, setting a center point of each of the punch holder and the die holder overlapping each other, machining a reference hole passing through each of the punch holder and the die holder overlapping each other at a position spaced a distance from the center point, and assembling the punch holder and die holder in which the reference holes are machined.

Embodiments of the present disclosure provide a method of manufacturing a die assembly for notching an electrode plate of a secondary battery, the method including: fixedly overlapping a punch holder and a die holder; simultaneously polishing side surfaces of each of the punch holder and the die holder; setting a center point of each of the punch holder and the die holder; generating a reference hole passing through the punch holder and the die holder at a position spaced from the center point; and assembling the punch holder and the die holder via the reference holes.

In an embodiment, the method further includes before the fixedly overlapping, polishing respective surfaces of the punch holder and the die holder that are to be in contact.

In an embodiment, the setting comprises setting the center point based on the side surfaces of each of the punch holder and the die holder that are simultaneously polished.

In an embodiment, the method further includes generating a pocket in each of the punch holder and the die holder based on the reference hole.

In an embodiment, the method further includes before the fixedly overlapping, roughly generating a pocket in each of the punch holder and the die holder.

In an embodiment, the fixedly overlapping comprises fixing the punch holder and the die holder using clamping, bolting, or welding.

In an embodiment, the assembling comprises inserting a pin into the reference hole of the punch holder and the reference hole of the die holder.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic view showing an electrode assembly of a secondary battery according to embodiments of the present disclosure;
FIG. 2 is a schematic view showing a pouch-type secondary battery according to embodiments of the present disclosure;
FIG. 3 is a cross-sectional view of a cylindrical battery according to embodiments of the present disclosure;
FIG. 4 shows an internal configuration of a prismatic secondary battery according to embodiments of the present disclosure;
FIG. 5 shows an electrode plate before and after shearing the electrode plate by a shearing die according to embodiments of the present disclosure;
FIG. 6 is a schematic view of a shearing die according to embodiments of the present disclosure;
FIG. 7 is a perspective view of a press equipment in which a punch and a die of FIG. 6 are installed according to embodiments of the present disclosure;
FIG. 8 is a vertical cross-sectional view showing the press equipment shown in FIG. 7 according to embodiments of the present disclosure;
FIG. 9 shows a punch holder and a die holder according to embodiments of the present disclosure;
FIG. 10 is a flowchart showing a method of manufacturing the punch holder and the die holder according to embodiments of the present disclosure;
FIGS. 11A to 11E show the punch holder and the die holder according to the process of FIG. 12 according to embodiments of the present disclosure;
FIG. 12 is a flowchart showing a method of manufacturing the punch holder and the die holder according to embodiments of the present disclosure;
FIGS. 13A to 13E show the punch holder and the die holder according to the process of FIG. 12 according to embodiments of the present disclosure; and
FIG. 14 shows a die assembly for notching an electrode plate of a secondary battery, which includes the punch holder and the die holder according to embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

The embodiments described herein can be explained with reference to cross-sectional views and/or plan views as example views of the present disclosure. In the figures, dimensions of the various elements, layers, etc. may be exaggerated for clarity of illustration. Thus, regions presented as an example in the drawings have general properties, and shapes of the areas can be used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described herein include complementary embodiments thereof. The same reference numerals designate the same elements.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

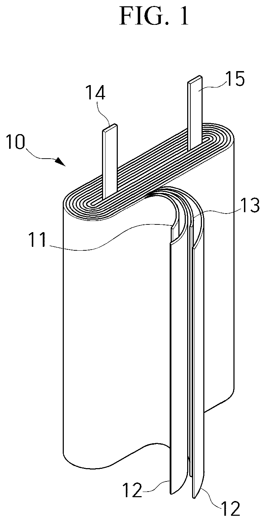

FIG. 1 is a schematic view showing an electrode assembly of a secondary battery according to embodiments of the present disclosure.

An electrode assembly 10 may be formed by winding or stacking a stack of a first electrode plate 11, a separator 12, and a second electrode plate 13, each of which are formed as thin plates or films. When the electrode assembly 10 is a wound stack, a winding axis may be parallel to the longitudinal direction of a case. In some embodiments, the electrode assembly 10 may be a stacked type. The shape of the electrode assembly 10 is not limited in the present disclosure. The electrode assembly 10 may be a Z-stack electrode assembly in which a positive electrode plate and a negative electrode plate are inserted into both sides (e.g., opposite sides) of a separator, which is then bent (or folded) into a Z-stack. One or more electrode assemblies may be stacked (e.g., arranged) such that longitudinal sides of the electrode assemblies are adjacent to each other and accommodated in a case. The number of electrode assemblies in a case is not limited in the present disclosure. The first electrode plate 11 of the electrode assembly may be configured as a negative electrode and the second electrode plate 13 may be configured as a positive electrode, and vice versa.

The first electrode plate 11 may be formed by applying (e.g., coating or depositing) a first electrode active material, such as graphite or carbon, onto a first electrode substrate formed of a metal foil including copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal. In some embodiments, when the first electrode plate 11 is manufactured, the first electrode tab 14 may be formed by being cut in advance to protrude to or protrude from one side of the electrode assembly 10. In some embodiments, the first electrode tab 14 may protrude to or protrude from one side of the electrode assembly 10 farther than or beyond the separator 12 without being separately cut.

The second electrode plate 13 may be formed by applying (e.g., coating or depositing) a second electrode active material, such as a transition metal oxide, onto a second electrode substrate formed of a metal foil including aluminum or an aluminum alloy. The second electrode plate 13 may include a second electrode tab 15 (e.g., a second uncoated portion), which is a region to which the second electrode active material is not applied. The second electrode tab 15 may be connected to an external second terminal. In some embodiments, the second electrode tab 15 may be formed by being cut in advance to protrude to or protrude from the other side (e.g., the opposite side) of the electrode assembly 10 when the second electrode plate 13 is manufactured. In some embodiments, the second electrode tab 15 may protrude to or protrude from the other side of the electrode assembly farther than or beyond the separator 12 without being separately cut.

The separator 12 prevents a short-circuit between the first electrode plate 11 and the second electrode plate 13 while allowing migration of lithium ions therebetween. The separator 12 may include a polyethylene film, a polypropylene film, a polyethylene-polypropylene film, or the like.

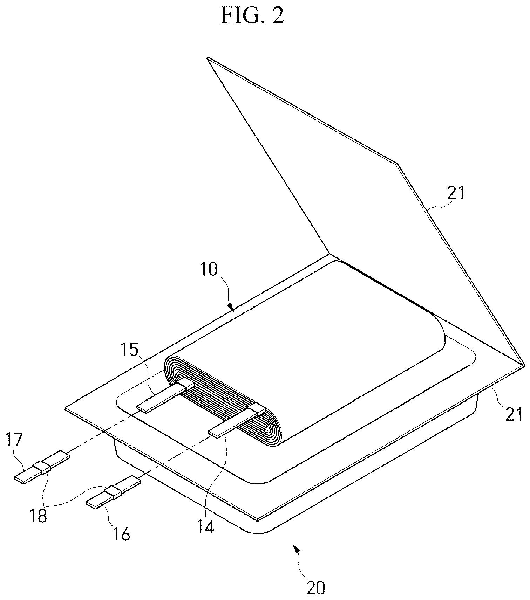

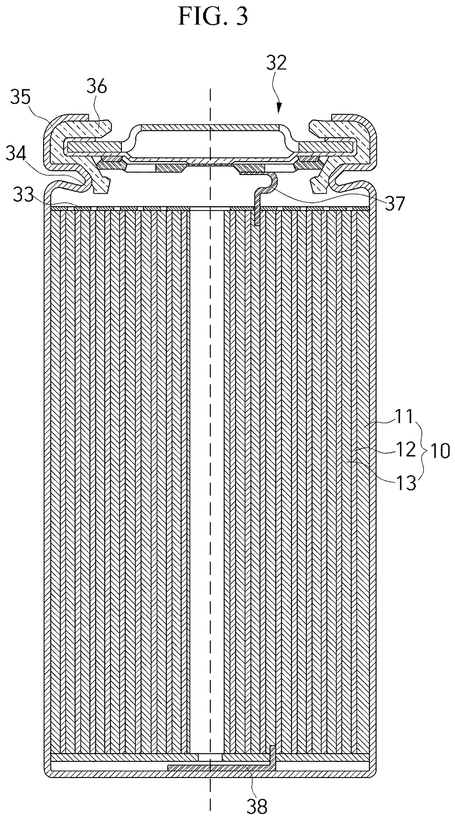

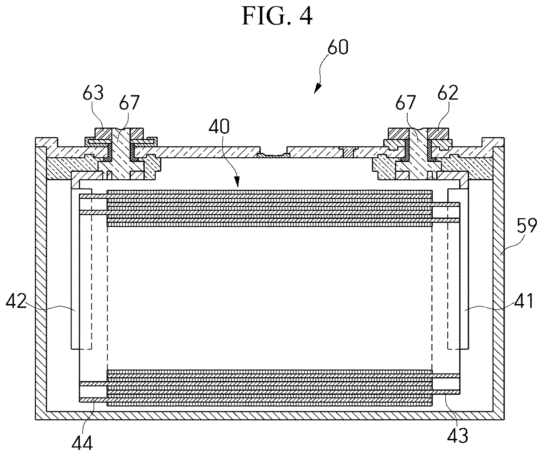

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 4).

The positive electrode active material may include a compound capable of reversibly intercalating/deintercalating lithium (e.g., a lithiated intercalation compound). In some embodiments, the positive electrode active material may include at least one of a composite oxide of lithium and a metal including cobalt, manganese, nickel, or combinations thereof.

The composite oxide may include a lithium transition metal composite oxide, such as a lithium nickel-based oxide, a lithium cobalt-based oxide, a lithium manganese-based oxide, a lithium iron phosphate-based compound, a cobalt-free nickel-manganese-based oxide, or a combination thereof.

In some embodiments, the composite oxide may include a compound represented by any one of the following formulas: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-6-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn₁₋G_{g}PO₄ (0.90≤a≤1.8, 0≤g≤0.5); Li_{(3-f)}Fe₂(PO₄)₃ (0≤f≤2); LiₐFePO₄ (0.90≤a≤1.8) where A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer positioned on the substrate. The positive electrode active material layer may include a positive electrode active material and may further include a binder and/or a conductive material.

The positive electrode active material may include about 90 wt% to about 99 wt% on the basis of 100 wt% of the positive electrode active material layer, and about 0.5 wt % to about 5 wt % of a binder, and about 0.5 wt % to about 5 wt % of a conductive material on the basis of 100 wt% of the positive electrode active material layer.

The substrate may include aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may include a carbon-based negative electrode active material including crystalline carbon, amorphous carbon, or a combination thereof. In an embodiment, the crystalline carbon may include graphite, such as natural graphite or artificial graphite, and the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may include silicon, a silicon-carbon composite, SiOₓ (0<x≤2), a Si-based alloy, or a combination thereof.

The silicon-carbon composite may include a composite of silicon and/or amorphous carbon. According to an embodiment, the silicon-carbon composite may exist in the form of a silicon particle and amorphous carbon coated on the surface of the silicon particle.

The silicon-carbon composite may further include crystalline carbon. In an embodiment, the silicon-carbon composite may include a core including crystalline carbon and silicon particles and an amorphous carbon coating layer on the surface of the core.

A negative electrode for a lithium secondary battery may include a substrate and a negative electrode active material layer positioned on the substrate. The negative electrode active material layer may include a negative electrode active material and may further include a binder and/or a conductive material.

The negative electrode active material layer may include about 90 wt % to about 99.5 wt % of a negative electrode active material, about 0.5 wt % to about 5 wt % of a binder, and about 0 wt % to about 5 wt % of a conductive material on the basis of 100 wt% of the negative electrode active material layer.

The binder may include a non-aqueous binder, an aqueous binder, a dry binder, or a combination thereof. When an aqueous binder is used as the negative electrode binder, a cellulose-based compound capable of enhancing viscosity may be further included.

The negative electrode substrate may include copper foil, nickel foil, stainless steel foil, titanium foil, nickel foam, copper foam, conductive metal-coated polymer substrate, or combinations thereof.

The electrolyte for a lithium secondary battery may include a non-aqueous organic solvent and/or a lithium salt.

The non-aqueous organic solvent is configured to serve as a medium through which ions involved in the electrochemical reaction of the battery can migrate.

The non-aqueous organic solvent may include a carbonate-based, an ester-based, an ether-based, a ketone-based, an alcohol-based solvent, an aprotic solvent, or combinations thereof.

In an embodiment, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). The separator may include polyethylene, polypropylene, polyvinylidene fluoride, or a multilayer film including two or more layers thereof.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles including Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or combinations thereof but is not limited thereto.

The organic material and the inorganic material may be combined into one coating layer or may be in the form of a coating layer including (or containing) an organic material and a coating layer including (or containing) an inorganic material where one coating layer is stacked onto the other.

FIG. 2 is a schematic view showing a pouch-type secondary battery according to embodiments of the present disclosure.

The pouch-type secondary battery includes an electrode assembly 10 and a pouch 20 that accommodates the electrode assembly 10.

The electrode assembly 10 can be substantially the same as that shown in FIG. 1. The first electrode tab 14 and the second electrode tab 15 of the electrode assembly 10 may be electrically connected to respective external first terminal lead 16 and second terminal lead 17 by welding. Each of the first terminal lead 16 and the second terminal lead 17 may be attached with a tab film 18 for insulation from the pouch 20.

The pouch 20 may be sealed by having sealing parts 21 at the edges thereof come into contact with each other while accommodating the electrode assembly 10 therein. The sealing may be achieved with the tab film 18 interposed between the sealing parts 21. The sealing parts 21 of the pouch 20 may each include a thermal fusion material that generally has weak adhesion to metal. Thus, the sealing parts 21 may be fused to the pouch 20 by interposing the thin tab film 18 between the sealing parts 21.

FIG. 3 is a cross-sectional view of a cylindrical battery according to embodiments of the present disclosure. A secondary battery may include an electrode assembly 10, a case accommodating the electrode assembly 10 and the electrolyte, a cap assembly 32 coupled to an opening of the case to seal the case, and an insulating plate 33 positioned between the electrode assembly 10 and the cap assembly 32 inside the case.

The case accommodates the electrode assembly 10 and the electrolyte, and, together with the cap assembly 32, forms the external appearance of the battery. The case may have a substantially cylindrical body portion and a bottom portion. A beading part 34 recessed toward the inside may be positioned in the body portion of the case, and a crimping part 35 bent toward the inside may be positioned at the opening-side end of the body portion of the case.

The beading part 34 is configured to reduce or prevent movement of the electrode assembly 10 inside the case and can facilitate seating of the gasket 36 and the cap assembly 32. The crimping part 35 may firmly fix the cap assembly 32 by pressing the edge of the case against the gasket 36. The case may include iron plated with nickel.

The cap assembly 32 may be fixed to the inside of the crimping part 35 via a gasket 36 to seal the case. A first lead tab 37 drawn out from the electrode assembly 10 may be connected to the cap assembly 32, and a second lead tab 38 drawn out from the electrode assembly 10 may be electrically connected to the bottom of the case.

FIG. 4 shows the internal configuration of a prismatic battery and the structure of a cap assembly 60 according to embodiments of the present disclosure.

The electrode assembly 40 of the type used in this prismatic battery can also be formed by winding a first electrode plate, a separator, and a second electrode plate, as shown in FIG. 1. When the electrode assembly 40 is a rolled laminate, the winding axis can be parallel to the longitudinal direction of the case 59. In an embodiment, the electrode assembly 40 can be a stacked type. The shape of the electrode assembly 40 is not limited in the present disclosure.

In an embodiment, the electrode assembly 40 may be a Z-stack electrode assembly in which a positive electrode plate and a negative electrode plate are inserted into both sides of a separator, which is then bent into a Z-stack. In an embodiment, one or more electrode assemblies may be stacked such that longitudinal sides of the electrode assemblies are adjacent to each other and accommodated in the case 59. The number of electrode assemblies in the case 59 is not limited in the present disclosure. The first electrode plate of the electrode assembly may be configured as a negative electrode and the second electrode plate may be configured as a positive electrode, and vice versa.

In some embodiments, the electrode assembly 40 is accommodated in the case 59 along with an electrolyte.

A first electrode tab 43 of the first electrode plate and a second electrode tab 44 of the second electrode plate extend from both ends of the electrode assembly 40.

In the electrode assembly 40, the first current collector 41 and the second current collector 42 may be welded and connected to the first electrode tab 43 extending from the first electrode plate and the second electrode tab 44 extending from the second electrode plate, respectively. In some embodiments in which the first electrode tab 43 and the second electrode tab 44 are located at the top of the electrode assembly 40, the first and second current collectors can be located at the top of the electrode assembly 40.

The first current collector 41 and the second current collector 42 are connected to the first terminal 62 and the second terminal 63, respectively, via connection members 67. In some embodiments, the connection members 67 may each have an outer peripheral surface that is threaded, and may be fastened to the first terminal 62 and the second terminal 63 by screwing. However, the present disclosure is not limited thereto. In an embodiment, the connection members 67 may also be coupled to the first terminal 62 and the second terminal 63 by riveting or welding.

A substrate for manufacturing of the electrode plate may include a metal foil containing aluminum (Al) (in the case of a positive electrode) or a metal foil containing copper (Cu) or nickel (Ni) (in the case of a negative electrode). In a coating process, the substrate is coated with a slurry or powder-state mixture (a mixture of electrode materials) prepared in advance to form a coating layer. Subsequently, in a rolling pressing, the coated substrate may be rolled by a roller to manufacture a high-capacity, high-density secondary battery. The rolled substrate is cut in a longitudinal direction in a slitting process to be separated into individual electrode plates and shaped into individual electrode plates in a notching process.

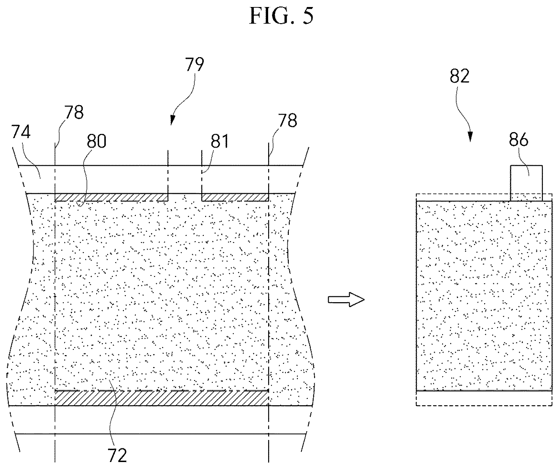

FIG. 5 is a general description of the notching process and shows the shape of the electrode plate before and after notching according to embodiments of the present disclosure.

A substrate 79 previously coated with an active material 72 may be cut in a transverse direction along a transverse cutting line 78 and cut in a longitudinal direction along a longitudinal cutting line 80 by a notching unit in the notching process. The notching unit may be removed and trim uncoated portion 74 along a shaping line 81. A notched electrode plate 82 has an area coated with a positive or negative electrode material and a tab 86 that is an uncoated area as illustrated at the right hand side of FIG. 5. The tab 86 is a part in which a conductive member, such as a current collector or a sub-plate, is bonded in a subsequent electrode assembly process.

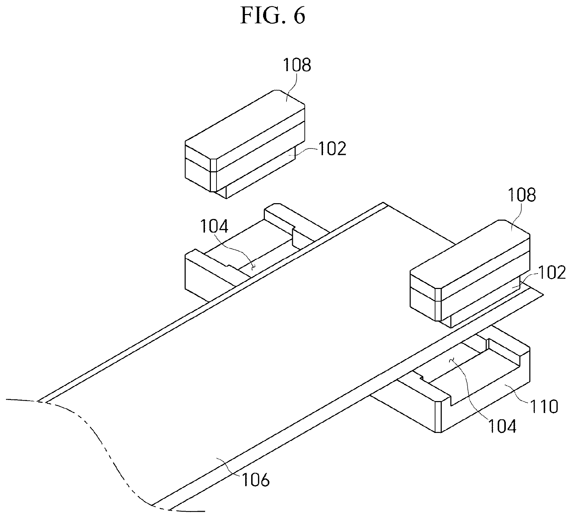

FIG. 6 is a schematic view of a notching die assembly according to embodiments of the present disclosure.

When an electrode plate 106 is loaded onto a die 104, a punch 102 moves downward and punches the electrode plate 106 according to a designed shape to manufacture an electrode plate having a shape as shown in FIG. 5. The punch 102 may be supported by a punch plate 108, and the die 104 may be supported by the die plate 110.

The punch 102 and the die 104 may include a pair of punches and a die so that the tab 86 of the electrode plate and a side opposite thereto shown in FIG. 5 may be punched and formed at the same time.

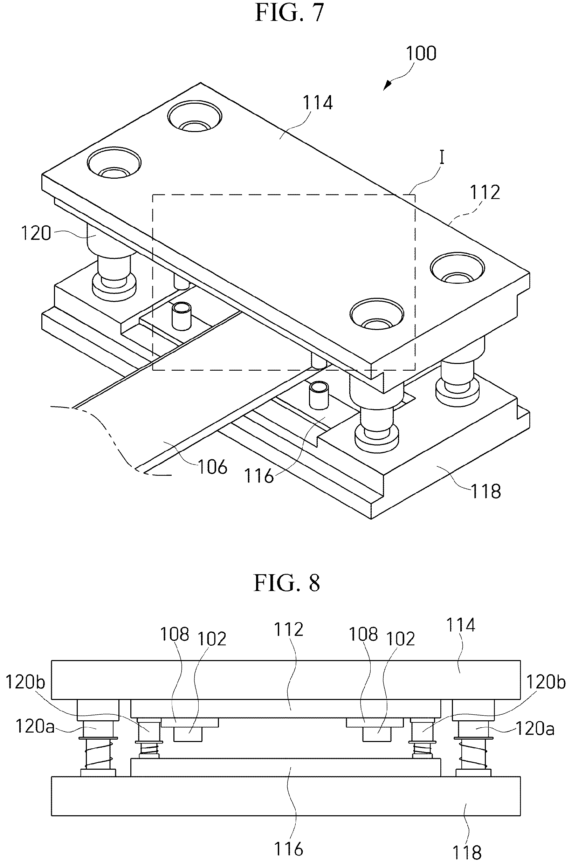

FIG. 7 shows a perspective view of a press equipment for operating the punch 102 and the die 104 of FIG. 6 according to embodiments of the present disclosure. The mechanism of FIG. 6 is included in portion I in FIG. 7. FIG. 8 is a vertical cross-sectional view of the press equipment shown in FIG. 7 according to embodiments of the present disclosure.

A notching die assembly 100 may include an upper die assembly and a lower die assembly. The upper die assembly may include a punch holder 112 fixing the punch plate 108 and an upper slide 114 for supporting the punch holder 112. The lower die assembly may include a die holder 116 to which the die plate 110 is fixed and a lower slide 118 for supporting the die holder 116. The upper die assembly may be moved vertically with respect to the lower die assembly by a guide post 120. The guide post 120 may include a main post 120a and a sub-post 120b.

As used herein, the punch 102 and the punch plate 108 may exist as a single component, and thus is collectively referred to as the punch 102. Similarly, the die 104 and the die plate 110 may also exist as a single component, and thus is collectively referred to as the die 104.

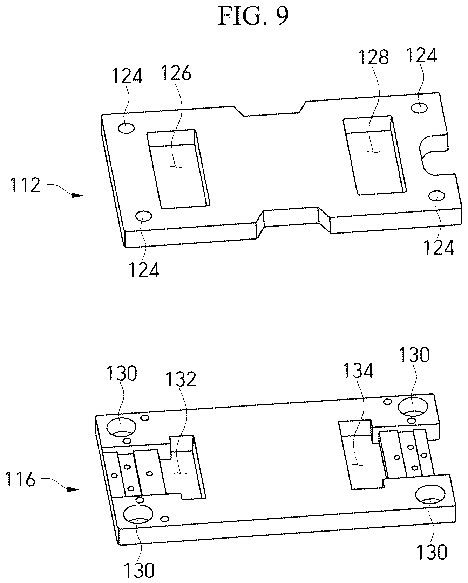

FIG. 9 shows the punch holder 112 and the die holder 116 in more detail according to embodiments of the present disclosure.

The punch holder 112 may include a tab punch pocket 126 which is an opening where a punch can be inserted into, and a bottom punch pocket 128 which is an opening where a punch can be inserted into. Holes 124 coupled to the die holder 116 may also be formed in the punch holder 112. The sub-post 120b may be coupled to the holes 124.

The die holder 116 may include a tab die pocket 132 corresponding to the tab punch pocket 126 and a bottom die pocket 134 corresponding to the bottom punch pocket 128. Holes 130 coupled to the punch holder 112 may be formed in the die holder 116. The sub-post 120b may be coupled to the holes 130.

Since parts of the notching die assembly can be individually machined, assembly precision can be reduced due to dimensional deviations between the parts when the notching die assembly is assembled. Since there is no reference point for measuring positions of the punches and dies even after the die assembly is assembled, only a distance between the punch and the die can be roughly measured.

The precision of the notching die assembly may be required to withstand a lateral load generated by a repulsive force of a machining target during notching. To this end, the precision of the pocket, to which the punch and die are assembled, is required to minimize the clearance of the punch and the die.

The clearance refers to a gap between the punch and the die in the notching die assembly. When the clearance is large, a burr may be generated on the product (e.g., the electrode plate) after notching. A clearance of a typical notching die assembly ranges from about 0.01 mm to 0.02 mm, and a clearance of an ultra-precision notching die assembly ranges from about 0.001 mm to 0.002 mm. To satisfy the ultra-precision clearance, precise die assembly machining and assembly are required, increasing the number of processes and costs of die assembly. When the die assembly is poor, the die assembly may break, and when precise assembly is not possible, re-grinding, readjustment, or the like is required, which becomes a cost increasing factor.

Advantageously, the present disclosure provides a notching die assembly for an electrode plate of a secondary battery, which includes the punch holder 112 in which the punch pocket is machined at a precise position and the die holder 116 in which the die pocket is machined at a precise position, and to this end, a method of precisely manufacturing the punch holder 112 in which the punch pocket is machined/to be machined and the die holder 116 in which the die pocket is machined/to be machined and a method of assembling the punch holder 112 and the die holder 116 that are manufactured precisely by the notching die assembly.

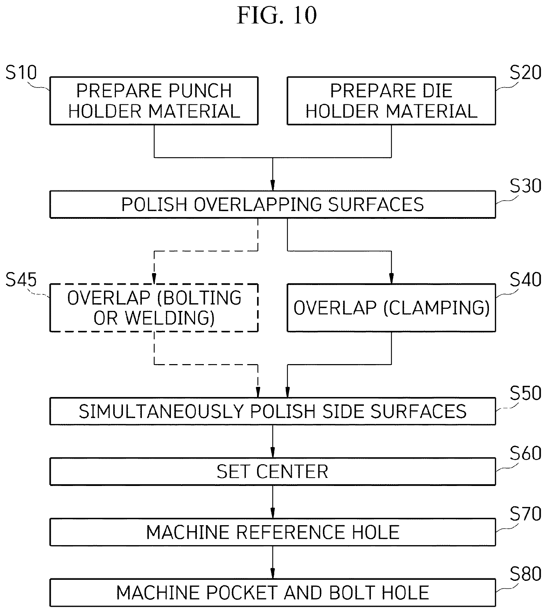

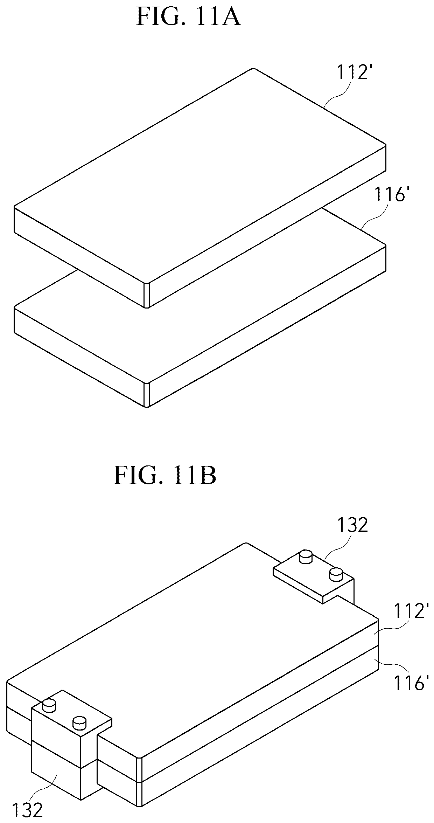

FIG. 10 is a flowchart showing a method of manufacturing the punch holder 112 and the die holder 116 according to embodiments of the present disclosure. FIGS. 11A to 11E show the punch holder 112 and the die holder 116 according to the process of FIG. 10 according to embodiments of the present disclosure.

In operations S10 and S20, a punch holder material 112' for manufacturing a punch holder and a die holder material 116' for manufacturing a die holder are prepared. FIG. 11A shows the punch holder material 112' and the die holder material 116'. The punch holder material 112' overlaps with the die holder material 116'.

In operation S30, before the punch holder material 112' overlaps with the die holder material 116', the overlapping surfaces of each material may be polished. Operation S30 may be selectively performed depending on states of the overlapping surfaces of the punch holder material 112' and the die holder material 116' or depending on the precision design specifications of the punch holder 112 and the die holder 116 to be finally manufactured.

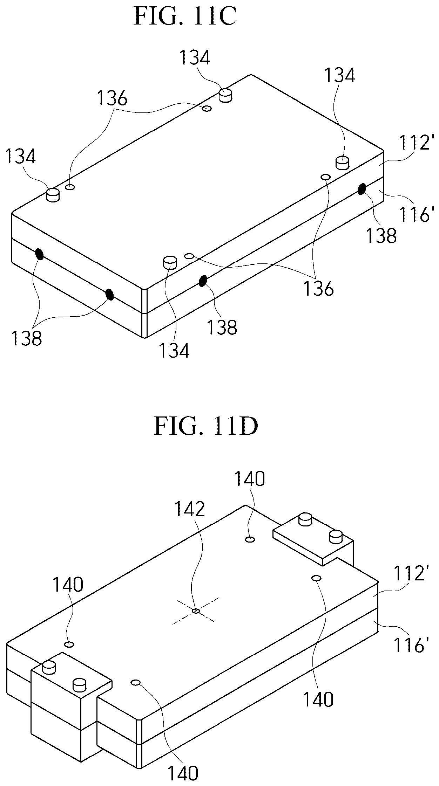

In operations S40 and S45, the punch holder material 112' fixedly overlaps the die holder material 116'. The fixedly overlapping of the punch holder material 112' and the die holder material 116' may be performed by methods such as clamping, bolting, fastening pins, welding, etc., but is not limited to the methods. FIG. 11B shows fixation using a clamp 132, and FIG. 11C shows fixation by a bolt 134, fixation by a fastening pin 136, and fixation by welding 138 together.

In operation S50, side surfaces of the punch holder material 112' and the die holder material 116' overlapping each other are polished simultaneously. Since side surfaces of an assembly in which the punch holder material 112' fixedly overlaps with the die holder material 116' are polished simultaneously, the side surfaces of each of the materials 112' and 116' match each other in terms of size. Since the simultaneous polishing of the side surfaces may be performed on all side surfaces of the punch holder material 112' and the die holder material 116', all side surfaces of the punch holder material 112' and the die holder material 116' may be aligned with each other, and areas of the materials may substantially be the same. In an embodiment, the side surfaces of the punch holder material 112' and the die holder material 116', upon simultaneous polishing, may be flush.

In operation S60, a center point 142 of an overlapping body of the punch holder material 112' and the die holder material 116' of which side surfaces are polished is set. A position of the center point 142 may be set based on the simultaneously polished side surfaces of the punch holder material 112' and the die holder material 116'. The center point 142 may be set as a hole having any diameter or a marking having any shape. The hole may be formed by a wiring machining device, and the marking may be formed by a laser marking device. FIG. 11D shows the center point 142 set in the form of a hole.

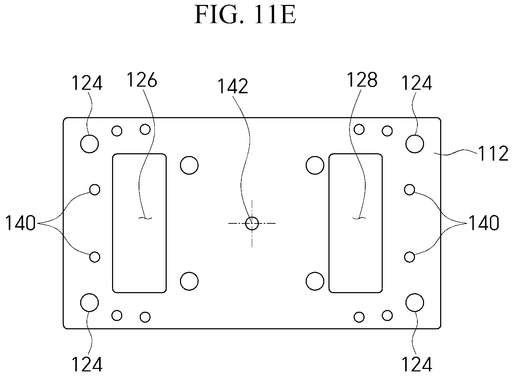

In operation S70, common reference holes 140 that pass through the punch holder material 112' and the die holder material 116' overlapping each other are machined at a position spaced a predetermined distance from the center point 142. FIG. 11E shows the reference holes 140. Four reference holes 140 can be formed, but the number of reference holes 140 may vary. Since the reference holes 140 are formed by passing through the fixedly overlapping punch holder material 112' and die holder material 116' as shown in FIG. 11D, the reference holes 140 of the punch holder material 112' and the reference holes 140 of the die holder material 116' now become references for machining positions of other processing target elements (e.g., pockets, holes, etc.).

In operation S80, with respect to the machined reference holes 140, pockets 126, 128, 132, and 134 in which punches and dies are mounted are machined in the punch holder material 112' and the die holder material 116'. Other machining target elements (e.g., bolt holes or various functional holes) may also be machined based on the reference holes 140. FIG. 11E shows the punch holder 112 completed by machining the punch mounting pockets 126 and 128 and the guide post coupling holes 124. Similarly, the die holder 116 may also be completed.

Since the side surfaces of the assembly in which the punch holder material 112' fixedly overlaps with the die holder material 116' are simultaneously polished and the punch pocket, the die pocket, and other machining target elements are machined based on the reference holes 140 machined based on the center point 142 set as the reference, the position deviation occurrence rate of the punch holder 112 and the die holder 116 can be minimized.

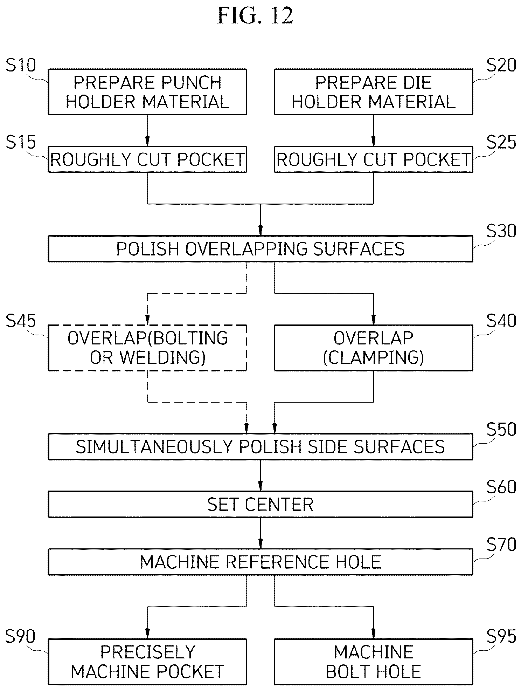

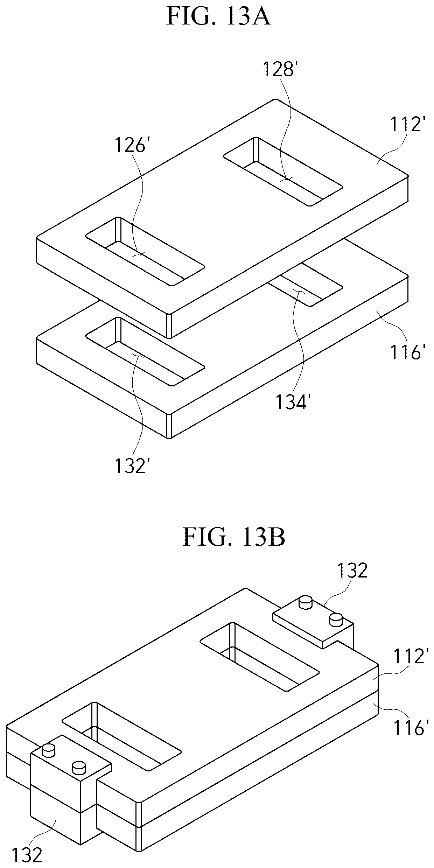

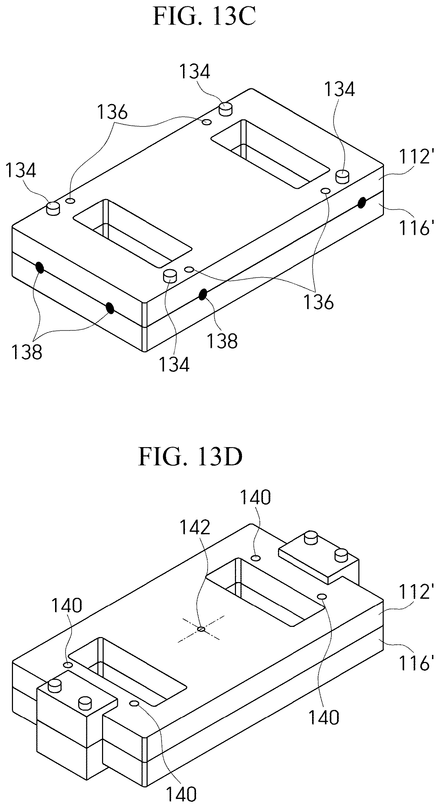

FIG. 12 is a flowchart showing a method of manufacturing the punch holder 112 and the die holder 116 according to embodiments of the present disclosure. FIGS. 13A to 13E show the punch holder 112 and the die holder 116 according to the process of FIG. 12 according to embodiments of the present disclosure.

In operations S10 and S20, the punch holder material 112' for manufacturing a punch holder and the die holder material 116' for manufacturing a die holder are prepared. FIG. 13A shows the punch holder material 112' and the die holder material 116'.

In operations S15 and S25, unlike as shown in FIG. 10, punch mounting pockets 126' and 128' are rough-cut (roughly machined) in the prepared punch holder material 112', and die mounting pockets 132' and 134' are rough-cut in the die holder material 116'. FIG. 13A shows the rough-cut pockets 126', 128', 132', and 134'. S30 to S70 are substantially the same as in the case of FIG. 10.

In operation S30, before the punch holder material 112' overlaps with the die holder material 116', overlapping surfaces of each material may be polished.

In operations S40 and S45, the punch holder material 112' fixedly overlaps with the die holder material 116'.

In operation S50, side surfaces of the punch holder material 112' and the die holder material 116' overlapping each other are polished simultaneously.

In operation S60, a center point 142 of an overlapping body of the punch holder material 112' and the die holder material 116' of which side surfaces are polished is set.

In operation S70, common reference holes 140 that pass through the punch holder material 112' and the die holder material 116' overlapping with each other are machined at a position spaced a predetermined distance from the center point 142.

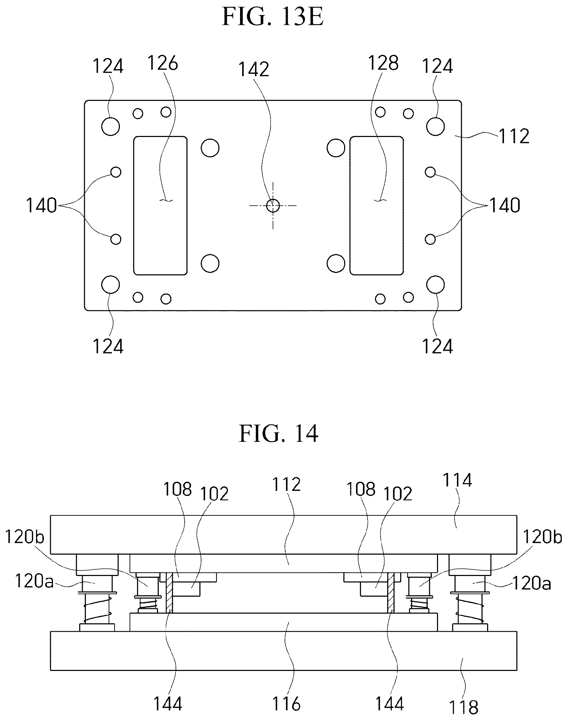

In operation S90, the pockets 126, 128, 132, and 134 rough-cut in the punch holder material 112' and the die holder material 116' are precisely machined based on the machined reference holes 140. In operation S95, the other machining target elements (e.g., bolt holes or various functional holes) may also be machined based on the reference holes 140. FIG. 13E illustrates the punch holder 112 completed by machining the punch mounting pockets 126 and 128 and the guide post coupling holes 124. Similarly, the die holder 116 may also be completed.

FIG. 14 shows a die assembly for notching an electrode plate of a secondary battery including the punch holder 112 and the die holder 116 that are manufactured by the method of manufacturing the punch holder and the die holder of the die assembly for notching an electrode plate of a secondary battery according to embodiments of the present disclosure.

The die assembly for notching an electrode plate of a secondary battery includes the punch holder 112 and the die holder 116 that are manufactured by the processes of FIGS. 10, and 11A to 11E, or FIGS 12, and 11A to 11E. The punch holder 112 may be supported by the upper slide 114, and the die holder 116 may be supported by the lower slide 118. The upper slide 114 and the lower slide 118 may be connected to the main post 120a, and the punch holder 112 and the die holder 116 may be connected to the sub-post 120b. Pins 144 may be inserted into the reference holes 140 (see FIGS. 11D and 13D) of the punch holder 112 and the reference holes 140 (see FIGS. 11D and 13D) of the die holder 116. The pin 144 may be an alignment pin that aligns the punch holder 112 with the die holder 116.

Since the side surfaces of the punch holder 112 and the die holder 116 are simultaneously polished while fixedly overlapping each other, the punch holder 112 and the die holder 116 have surfaces aligned with each other. The punch holder 112 and the die holder 116 have the common center point 142 set at the same position with respect to the simultaneously polished side surfaces and have the common reference holes 140 machined based on the center point 142.

The method of manufacturing the die assembly for notching an electrode plate of a secondary battery may include manufacturing a punch holder and a die holder by the aforementioned method of manufacturing a punch holder and a die holder, assembling the manufactured punch holder and die holder, and connecting the punch holder and the die holder to an upper slide and a lower slide, respectively.

The assembling of the manufactured punch holder and die holder may include mounting a punch on the punch holder and a die on the die holder, connecting the punch holder and the die holder with a sub-post, and inserting a pin into a reference hole of the punch holder and a reference hole of the die holder.

Since a punch pocket, a die pocket, and other machining target part are machined based on a reference hole, a deviation occurrence rate between a punch holder and a die holder can be minimized. Therefore, it is possible to maintain constant position precision of a punch and a die of a shearing die, such as notching of an electrode plate, thereby minimizing torsion of die assembly parallelism and minimizing problems such as occurrence of burr during machining of an electrode plate and damage to the punch and the die.

Since achieving an 1:1 assembly (i.e., having a "zero" clearance) of the punch and the die in the notching die assembly is an important factor to consider, by increasing precision of a punch holder pocket and a die holder pocket to which the punch and the die are assembled, respectively, it is possible to easily maintain a clearance of the punch and the die and minimize the amount of the punch holder pushed by a pressure of a lateral load generated while punching.

Conventionally, when the punch holder and the die holder are assembled, the punch holder and the die holder have been assembled inevitably involve human error due to low dimension precision of the punch holder and the die holder. In contrast, the present disclosure provides, by setting a reference hole at a precise position to convert dimensions into data and manage the data, it is possible to reduce a lifetime deviation of the punch and the die, thereby extending the lifetime of the entire die assembly.

The present disclosure can be applied to not only the shearing die of the electrode plate of the secondary battery but also die assemblies for other purposes and functions that require position precision of the punch and the die.

Embodiments are set out in the following clauses:
Clause 1. A die assembly for notching an electrode plate of a secondary battery, comprising:
   a punch holder in which a pocket is machined, a punch for notching an electrode plate of a secondary battery being mounted on the pocket; and
   a die holder in which a pocket is machined, a die for notching the electrode plate of the secondary battery being mounted on the pocket,
   wherein side surfaces of the punch holder and the die holder are aligned with each other,
   each of the punch holder and the die holder has a center point that is common at the same position, and
   each of the punch holder and the die holder has a reference hole that is common and machined at a position spaced a distance from the center point.
Clause 2. The die assembly as claimed in clause 1, wherein the side surfaces of the punch holder and the die holder are manufactured to be aligned with each other by fixedly overlapping the punch holder and the die holder and simultaneously polishing the side surfaces.
Clause 3. The die assembly as claimed in clause 1 or clause 2, wherein the position of the common center point of each of the punch holder and the die holder is set based on the side surface of each of the punch holder and the die holder.
Clause 4. The die assembly as claimed in any one of the preceding clauses, wherein the pocket of the punch holder is machined based on the reference hole, and
   the pocket of the die holder is machined based on the reference hole.
Clause 5. The die assembly as claimed in any one of the preceding clauses, further comprising a pin inserted into the reference hole of the punch holder and the reference hole of the die holder.
Clause 6. A method of manufacturing a punch holder and a die holder of a die assembly for notching an electrode plate of a secondary battery, the method comprising:
   fixedly overlapping a punch holder and a die holder;
   simultaneously polishing side surfaces of the punch holder and the die holder overlapping each other;
   setting a center point of each of the punch holder and the die holder overlapping each other; and
   machining a reference hole passing through each of the punch holder and the die holder overlapping each other at a position spaced a distance from the center point.
Clause 7. The method as claimed in clause 6, further comprising
   before the fixedly overlapping of the punch holder and the die holder, polishing surfaces to be overlapped of the punch holder and the die holder.
Clause 8. The method as claimed in clause 6 or clause 7, wherein the setting of the center point of each of the punch holder and the die holder overlapping each other comprises setting the center point based on the polished side surfaces of the punch holder and the die holder.
Clause 9. The method as claimed in any one of clauses 6 to 8, further comprising machining a pocket in each of the punch holder and the die holder based on the machined reference hole.
Clause 10. The method as claimed in in any one of clauses 6 to 9, further comprising, before the fixedly overlapping of the punch holder and the die holder,
   roughly cutting a pocket in each of the punch holder and the die holder.
Clause 11. The method as claimed in in any one of clauses 6 to 10, wherein the fixedly overlapping of the punch holder and the die holder comprises fixing the punch holder and the die holder using one method of clamping, bolting, and welding.
Clause 12. A method of manufacturing a die assembly for notching an electrode plate of a secondary battery, the method comprising:
   fixedly overlapping a punch holder and a die holder;
   simultaneously polishing side surfaces of the punch holder and the die holder overlapping each other;
   setting a center point of each of the punch holder and the die holder overlapping each other;
   machining a reference hole passing through the punch holder and the die holder overlapping each other at a position spaced a distance from the center point; and
   assembling the punch holder and die holder in which the reference holes are machined.
Clause 13. The method as claimed in clause 12, further comprising
   before the fixedly overlapping of the punch holder and the die holder, polishing surfaces to be overlapped of the punch holder and the die holder.
Clause 14. The method as claimed in clause 12 or clause 13, wherein the setting of the center point of each of the punch holder and the die holder overlapping each other comprises setting the center point based on the polished side surfaces of the punch holder and the die holder.
Clause 15. The method as claimed in in any one of clauses 12 to 14, further comprising machining a pocket in each of the punch holder and the die holder based on the machined reference hole.
Clause 16. The method as claimed in in any one of clauses 12 to 15, further comprising, before the fixedly overlapping of the punch holder and the die holder,
   roughly cutting a pocket in each of the punch holder and the die holder.
Clause 17. The method as claimed in in any one of clauses 12 to 16, wherein the fixedly overlapping of the punch holder and the die holder comprises fixing the punch holder and the die holder using one method of clamping, bolting, and welding.
Clause 18. The method as claimed in in any one of clauses 12 to 17, wherein the assembling of the punch holder and die holder in which the reference holes are machined comprises inserting a pin into the reference hole of the punch holder and the reference hole of the die holder.

Although the present disclosure has been described above with respect to embodiments thereof, the present disclosure is not limited thereto. Various modifications and variations can be made thereto by those skilled in the art within the scope of the claims.

## Claims

1. A die assembly, comprising:
a punch holder comprising a first pocket, the first pocket configured to accommodate a punch for notching an electrode plate of a secondary battery being placed on the first pocket; and
a die holder comprising a second pocket, the second pocket configured to accommodate a die for notching the electrode plate being placed on the second pocket,
wherein side surfaces of each of the punch holder and the die holder are aligned with each other,
wherein each of the punch holder and the die holder has a center point at a same position, and
wherein each of the punch holder and the die holder has a reference hole at a same position spaced from the center point.

2. The die assembly as claimed in claim 1, wherein the punch holder and the die holder are fixedly overlapping with each other, and wherein the side surfaces of each of the punch holder and the die holder, upon simultaneous polishing, are flush.

3. The die assembly as claimed in claim 1 or claim 2, wherein the position of the center point of each of the punch holder and the die holder is based on the side surfaces of each of the punch holder and the die holder.

4. The die assembly as claimed in any one of the preceding claims, wherein the first pocket is based on the reference hole of the punch holder, and
wherein the second pocket is based on the reference hole of the die holder.

5. The die assembly as claimed in any one of the preceding claims, further comprising a pin inserted into the reference hole of the punch holder and the reference hole of the die holder.

6. A method of manufacturing a punch holder and a die holder of a die assembly for notching an electrode plate of a secondary battery, the method comprising:
fixedly overlapping the punch holder and the die holder;
simultaneously polishing side surfaces of each of the punch holder and the die holder;
setting a center point of each of the punch holder and the die holder; and
generating a reference hole passing through each of the punch holder and the die holder at a position spaced from the center point.

7. The method as claimed in claim 6, further comprising:
before the fixedly overlapping, polishing respective surfaces of the punch holder and the die holder that are to be in contact.

8. The method as claimed in claim 6 or claim 7, wherein the setting comprises setting the center point based on the side surfaces of each of the punch holder and the die holder that are simultaneously polished.

9. The method as claimed in any one of claims 6 to 8, further comprising generating a pocket in each of the punch holder and the die holder based on the reference hole.

10. The method as claimed in any one of claims 6 to 9, further comprising:
before the fixedly overlapping, roughly generating a pocket in each of the punch holder and the die holder.

11. The method as claimed in any one of claims 6 to 10, wherein the fixedly overlapping comprises fixing the punch holder and the die holder using clamping, bolting, or welding.

12. A method of manufacturing a die assembly for notching an electrode plate of a secondary battery, the method comprising:
fixedly overlapping a punch holder and a die holder;
simultaneously polishing side surfaces of each of the punch holder and the die holder;
setting a center point of each of the punch holder and the die holder;
generating a reference hole passing through the punch holder and the die holder at a position spaced from the center point; and
assembling the punch holder and the die holder via the reference holes.

13. The method as claimed in claim 12, further comprising
before the fixedly overlapping, polishing respective surfaces of the punch holder and the die holder that are to be in contact.

14. The method as claimed in claim 12 or claim 13, further comprising generating a pocket in each of the punch holder and the die holder based on the reference hole.

15. The method as claimed in any one of claims 12 to 14, wherein the assembling comprises inserting a pin into the reference hole of the punch holder and the reference hole of the die holder.
